# EUROPÄISCHE PATENTSCHRIFT

(11) **EP 1 166 013 B1**
(45) Veröffentlichungstag und Bekanntmachung des Hinweises auf die Patenterteilung: **05.11.2008**
(21) Anmeldenummer: 01913581.3
(22) Anmeldetag: 05.02.2001
(51) Int. Cl.: F21V 8/00

(54) **Frontbeleuchtete Anzeigevorrichtung**
Front-illuminated Display Device
Dispositif d'affichage par la face avant

(30) Priorität: 04.02.2000 DE 10004972
(43) Veröffentlichungstag der Anmeldung: 02.01.2002
(73) Patentinhaber: ROBERT BOSCH GMBH, 70442 Stuttgart (DE)
(72) Erfinder: FLOHR, Heinrich, 31137 Hildesheim (DE); VOGT, Siegfried, 31139 Hildesheim (DE)
(86) Internationale Anmeldenummer: PCT/DE2001/000459
(87) Internationale Veröffentlichungsnummer: WO 2001/057434

(56) Entgegenhaltungen:
- EP-A- 0 879 991
- EP-A- 0 961 076
- WO-A-99/57485
- DE-A- 19 538 893
- DE-U- 8 632 415

## Beschreibung

### Stand der Technik

Die Erfindung geht aus von einer Vorrichtung zur Frontbeleuchtung einer flächigen Anzeige nach der Gattung des Hauptanspruchs. Es ist aus der DE 19538893 schon eine Vorrichtung zur Hinterleuchtung einer flächigen Anzeige bekannt, bei der das Licht einer Lichtquelle in eine Lichtleiterplatte eingekoppelt wird, wobei dem Material der Lichtleiterplatte Diffusionspartikel zur Lichtstreuung zugesetzt sind. Bei einer Vorrichtung zur Hinterleuchtung einer Anzeige ist es jedoch erforderlich, für eine gut ablesbare Anzeige die Hinterleuchtung während der Betrachtung durch einen Benutzer ständig zu betreiben. Um auch einen Betrieb ohne Hinterleuchtung nur mit Tageslicht zu ermöglichen, muß eine Schicht aus einem reflektierenden Material hinter der Anzeige angeordnet sein. Wird das reflektierende Material vor der Hinterleuchtung angeordnet, muß es das Licht der Hinterleuchtung durchlassen können. Daher muß es zumindest teilweise lichtdurchlässig sein. Hierdurch sinkt der Wirkungsgrad der Reflexion des die Anzeige erhellenden Tageslichtes ab. Ferner ist es bekannt, um eine gute Ablesbarkeit bei dem Betrieb mit Umgebungslicht einerseits und eine gut Ablesbarkeit bei einem Hinterleuchtungsbetrieb der flächigen Anzeige zu vereinen, eine Lichtleiterplatte mit Mikroprismen vor der flächigen Anzeige anzuordnen. Um eine Lichtleiterplatte mit Mikroprismen herzustellen, ist jedoch z.B. für die Herstellung im Spritzgussverfahren ein Werkzeug erforderlich, durch dessen Herstellung hohe Kosten entstehen. Außerdem dürfen die Mikroprismen die Ablesbarkeit nicht beeinträchtigen.

Aus der DE 86 32 415 U1 ist eine Beleuchtungsvorrichtung für eine LCD-Anzeige bekannt, bei der vor der LCD-Anzeige ein an die Abmessungen der LCD-Anzeige angepasster Körper aus glasklarem Kunststoff, insbesondere Acrylglas, angeordnet ist, der an einem der LCD-Anzeige abgewandten Oberfläche eine Reflexionsbeschichtung aus beispielsweise kreisförmigen, weißen, lichtundurchlässigen Farbpunkten trägt und an oder in dem seitlich Beleuchtungselemente vorgesehen sind.

Aus der EP 0 961 076 A1 ist eine Frontbeleuchtungs-Einrichtung bekannt, bei der in eine Schmalseite eines Lichtleiters mit eingebrachten Mikrostrukturen zur Lichtauskopplung Licht eingekoppelt wird. Zwischen diesem Lichtleiter und einer Flüssigkristallanzeige ist zur Vermeidung von Moire-Mustern ein weiterer Lichtleiter vorgesehen, der als ein Diffusor ausgeführt ist. Insbesondere können in den Diffusor lichtstreuende Partikel eingebracht sein.

### Vorteile der Erfindung

Die erfindungsgemäße Vorrichtung mit den Merkmalen des Hauptanspruchs hat demgegenüber den Vorteil, dass das in die Lichtleiterplatte einfallende Licht durch die lichtstreuenden Partikel zu der Anzeige umgelenkt wird und somit die Anzeige erhellt. Eine Frontbeleuchtung der Anzeige ist damit auf einfache und kostengünstige Weise möglich. Dabei wird die Ablesbarkeit bei einem Betrieb mit Umgebungslicht vernachlässigbar beeinflusst.

Durch die in den Unteransprüchen aufgeführten Maßnahmen sind vorteilhafte Weiterbildungen und Verbesserungen der im Hauptanspruch angegebenen Vorrichtung möglich. Besonders vorteilhaft ist es, dass die Lichtleiterplatte zumindest ein Teil einer Frontplatte eines Gehäuses für die flächige Anzeige ist. Hierdurch wird die flächige Anzeige durch die Lichtleiterplatte abgedeckt und damit vor Berührung, Verschmutzung und/oder Zerstörung geschützt. Gegenüber einer Anzeigenausführung mit einer Hinterleuchtung kann hierdurch die Größe des Gehäuses für die flächige Anzeige vermindert werden, da statt einer Lichtleiterplatte für die Hinterleuchtung und einer Abdeckung lediglich eine Lichtleiterplatte benötigt wird.

Ferner ist es vorteilhaft, dass das Licht einer Lichtquelle über mindestens eine reflektierende Fläche in die Lichtleiterplatte eingekoppelt wird. Hierdurch ist es möglich, daß die Lichtquelle nicht direkt neben der Lichtleiterplatte angeordnet sein muß, sondern daß auch eine für die Konstruktion der gesamten Anzeigevorrichtung günstige Position der Lichtquelle gewählt werden kann und das von ihr ausgestrahlte Licht mittels der reflektierenden Fläche in die Lichtleiterplatte eingekoppelt wird.

Ferner ist es vorteilhaft, in einer Seitenfläche der Lichtleiterplatte einen Lichtleiterkeil vorzusehen, der es ermöglicht, nur eine einzelne, nahezu punktförmige Lichtquelle für die Hinterleuchtung zu verwenden.

Weiterhin ist es vorteilhaft, an der Vorrichtung ein lichtempfindliches, elektrisches Bauteil anzuordnen, und über das lichtempfindliche Bauteil die Umgebungshelligkeit zu messen. In Abhängigkeit von einer Auswertung des durch das lichtempfindliche Bauteil fließenden Stroms oder der an dem lichtempfindlichen Bauteil abfallenden Spannung wird die Helligkeit der Beleuchtung der flächigen Anzeige geregelt. Hierdurch ist es möglich, die Beleuchtung bei einer ausreichenden Umgebungshelligkeit abschalten zu können und hierdurch die gesamte Leistungsaufnahme der flächigen Anzeige gegenüber einer ständig betriebenen Beleuchtung zu vermindern. Durch die automatische Abschaltung kann die Frontbeleuchtung nicht versehentlich bei einer zunehmenden Umgebungshelligkeit in Betrieb bleiben. Nimmt die Umgebungshelligkeit dagegen ab, schaltet sich die Frontbeleuchtung automatisch ein.

Weiterhin ist es vorteilhaft, an der von der Lichtleiterplatte abgewandten Seite der Anzeige einen Reflektor anzuordnen, da durch diesen Licht, das die flächige Anzeige durchquert hat, umgelenkt und zu einem Betrachter zurück reflektiert wird. Die gesamte Helligkeit der Anzeige wird hierdurch verbessert.

Weiterhin ist es vorteilhaft, einen Volumenanteil der Diffusionspartikel von maximal 2 % von dem gesamten Volumen der Lichtleiterplatte vorzusehen. Durch diesen geringen Anteil der Diffusionspartikel wird eine Ablesbarkeit der Anzeige höchstens minimal beeinflußt.

### Zeichnung

Ausführungsbeispiele der Erfindung sind in der Zeichnung dargestellt und in der nachfolgenden Beschreibung näher erläutert.

Es zeigen Figur 1 ein erstes Ausführungsbeispiel für eine erfindungsgemäße Anzeigevorrichtung in einer Seitenansicht, Figur 2 die erfindungsgemäße Anzeigevorrichtung in einer Aufsicht, Figur 3 ein weiteres Ausführungsbeispiel einer erfindungsgemäßen Anzeigevorrichtung in einer Seitenansicht, Figur 4 und 5 ein weiteres, erfindungsgemäßes Ausführungsbeispiel in zwei verschiedenen Seitenansichten, Figur 6 und Figur 7 ein weiteres Ausführungsbeispiel in einer Aufsicht und einer Seitenansicht.

### Beschreibung des Ausführungsbeispiels

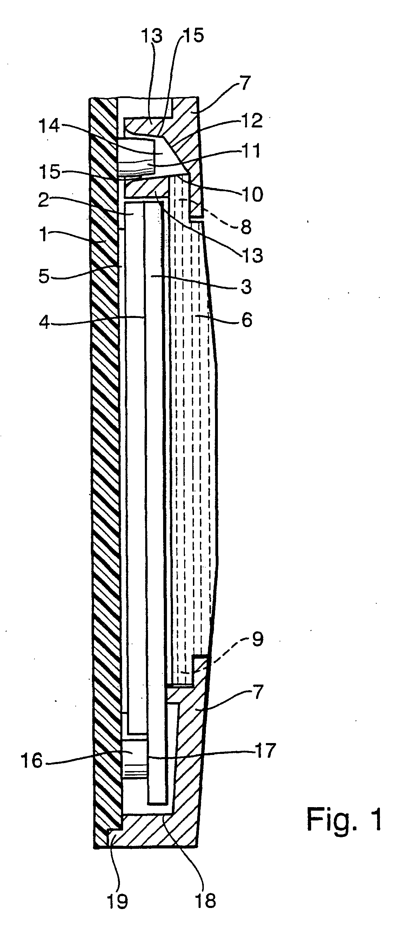

In der Figur 1 ist eine erfindungsgemäße Anzeigevorrichtung in einer Seitenansicht in einem Querschnitt dargestellt. Die Figur 1 zeigt eine Grundplatte 1 der Anzeigevorrichtung, auf der eine als eine Flüssigkristallzelle ausgeführte flächige Anzeige angeordnet ist. Die Flüssigkristallzelle besteht aus einer ersten Platte 2 und einer zweiten Platte 3. Zwischen der ersten Platte 2 und der zweiten Platte 3 ist eine Flüssigkristallschicht 4 angeordnet. Zwischen der ersten Platte 2 und der Grundplatte 1 ist ein Reflektor 5 angeordnet. Der Reflektor 5, die erste Platte 2 und die zweite Platte 3 sind parallel zu der Grundplatte 1 angeordnet. Die Grundplatte 1 ist auf der einem Betrachter abgewandten Seite der aus der ersten Platte 2 und der zweiten Platte 3 und der Flüssigkristallschicht 4 gebildeten Flüssigkristallzelle angeordnet. Auf der dem Betrachter zugewandten Seite der zweiten Platte 3 ist eine Lichtleiterplatte 6 angeordnet. Die Lichtleiterplatte 6 greift an ihren Rändern in ein Gehäuse 7. Die Lichtleiterplatte 6 erstreckt sich mit einer ersten Erweiterung 8 und einer zweiten Erweiterung 9 in ihren Randbereichen unterhalb des Gehäuses 7. Im Bereich der ersten Erweiterung 8 endet die Lichtleiterplatte 6 mit einer Einkoppelfläche 10. In die Einkoppelfläche 10 ist das Licht einer Lichtquelle 11 einkoppelbar, die auf der Grundplatte 1 angeordnet ist. Das Gehäuse 7 verfügt auf einer dem Benutzer abgewandten Seite über eine reflektierende Fläche 12, die das von der Lichtquelle 11 abgestrahlte Licht in Richtung der Einkoppelfläche 10 umlenkt. Die Lichtquelle 11 wird teilweise von einer ringförmigen Umrandung 13 umgeben, die an das Gehäuse 7 angeformt ist. Die ringförmige Umrandung bildet eine Öffnung 14 zur Aufnahme der Lichtquelle 11. An den Rand der ringförmigen Umrandung 13 schließt die reflektierende Fläche 12 und die Einkoppelfläche 10 an. Dabei bildet die ringförmige Umrandung einen Topf, an dessen Boden die reflektierende Fläche 12 und die Einkoppelfläche 10 angeordnet sind. Eine Wandung 15 der ringförmigen Umrandung 13 ist vorzugsweise mit einer reflektierenden Schicht bedeckt. An der der Lichtquelle 11 gegenüberliegenden Seitenfläche der ersten Platte 2 sind Ansteuerungskontakte 16 angeordnet. Über einen Kontaktbereich 17 besteht ein elektrischer Kontakt zu der zweiten Platte 3. Die zweite Platte 3 ragt dabei in dem Bereich der Ansteuerungskontakte 16 über die erste Platte 2 hervor. Das Gehäuse 7 bildet im Anschluß an die zweite Platte 3 einen Rand 18, über den das Gehäuse 7 mit der Grundplatte 1 vorzugsweise über eine Verzahnung 19 verbunden ist.

Die Lichtquelle 11 ist vorzugsweise durch eine Lötverbindung mit der Grundplatte 1 verbunden, die zum Beispiel als eine Leiterplatte ausgeführt ist. Elektrische Anschlüsse der Lichtquelle 11 sind in der Figur 1 nicht dargestellt. Die Lichtquelle ist vorzugsweise als eine Leuchtdiode ausgeführt. Weiterhin ist auch die Ausführung als eine Glühlampe, als eine Glimmlampe oder als eine Kaltkathodenfluoreszenzlampe möglich. Das von der Lichtquelle 11 erzeugte Licht wird über die reflektierende Fläche 12 in Richtung der Einkoppelfläche 10 gelenkt und in die Lichtleiterplatte 6 eingekoppelt. Die reflektierende Fläche 12 ist dabei vorzugsweise als eine auf dem Material des Gehäuses 7 aufgebrachte Metallschicht, als ein aufgeklebter Metallfilm oder als eine weiße Kunststoffschicht ausgeführt. Das in die Lichtleiterplatte 6 eingetretene Licht wird unter Totalreflexion an den Seitenflächen der Lichtleiterplatte 6 durch die Lichtleiterplatte 6 geleitet. In die Lichtleiterplatte sind jedoch Diffusionspartikel eingelassen. Während der Lichtleiter zum Beispiel aus Polymethylmetacrylat (PMMA) gefertigt ist, werden in einem bevorzugten Ausführungsbeispiel kleine Kugeln aus Polycarbonat (PC) bei einer Spritzgußherstellung des Lichtleiters eingebracht. Die Kügelchen aus Polycarbonat weisen einen Durchmesser in einem Bereich von 1 µm bis zu 6 µm auf. Durch den anderen Brechungsindex des Polycarbonats gegenüber dem PMMA kommt es zu Brechungserscheinungen von Lichtstrahlen an den eingebrachten Kügelchen. Hierdurch werden die Lichtstrahlen ausgelenkt und eine Totalreflexion an der Oberfläche der Lichtleiterplatte 6 wird verhindert. Insbesondere werden Lichtstrahlen in Richtung der Flüssigkristallzelle, also der zweiten Platte 3, abgelenkt. Diese Lichtstrahlen verlassen die Lichtleiterplatte 6, durchtreten die zweite Platte 3, die Flüssigkristallschicht 4 und die erste Platte 2. Hierbei werden sie ein erstes Mal von der Flüssigkristallschicht 4 in ihrer optischen Eigenschaft beeinflußt. Von dem Reflektor 5 werden die Lichtstrahlen zurück durch die erste Platte 2, die Flüssigkristallschicht 4 und die zweite Platte 3 reflektiert und hierbei ein zweites Mal von der Flüssigkristallschicht 4 beeinflußt. Sie durchqueren danach die Lichtleiterplatte 6 und gelangen nach dem Austritt aus der Lichtleiterplatte 6 zu einem Betrachter der Anzeigevorrichtung. Hierdurch ist ein Beleuchtungsbetrieb der Anzeigevorrichtung mit einer Beleuchtung der Flüssigkristallzelle gegeben.

Ist nun die Lichtquelle 11 nicht im Betrieb, so tritt Umgebungslicht in die Lichtleiterplatte 6 ein, durchquert wie oben beschrieben die Flüssigkristallzelle, wird an dem Reflektor 5 reflektiert, durchquert die Flüssigkristallzelle erneut und gelangt durch die Lichtleiterplatte 6 zu einem Benutzer. Eine Ablenkung des Lichtes durch die Diffusionspartikel ist in diesem Fall nicht erforderlich und auch kaum gegeben, daß das Licht die Lichtleiterplatte 6 direkt durchquert und nicht unter Totalreflexion einen möglicherweise langen Weg durch die Lichtleiterplatte 6 zurücklegt. Das Gehäuse 7 und die Grundplatte 1 sind aus einem lichtundurchlässigen Kunststoff gefertigt, um Lichtverluste zu vermeiden. Sowohl das Gehäuse 7 als auch die Grundplatte 1 sind vorzugsweise aus Kunststoff gefertigt. Das Gehäuse 7 ist mit der Grundplatte 1 verzahnt. Ebenso ragt das Gehäuse auf der dem Betrachter zugewandten Seite auch teilweise über die Lichtleiterplatte 6 hinaus, so daß die Lichtleiterplatte 6 von dem Gehäuse 7 gehalten wird. Die Ansteuerungskontakte 16 der Flüssigkristallzelle sind nur symbolhaft in der Figur 1 eingezeichnet. Einzelne Kontakte und Anschlüsse sind nicht detailliert eingezeichnet. Die erste Platte 2 und die zweite Platte 3 sind vorzugsweise aus Glas gefertigt. Sowohl an der ersten Platte 2 als auch an der zweiten Platte 3 ist ein in der Figur 1 nicht eingezeichneter Polarisator angeordnet. Es ist dabei auch z.B. eine homöotrope Ausführung der Flüssigkristallschicht möglich, durch die auf einen Polarisator verzichtet werden kann. Der Reflektor 5 ist vorzugsweise als eine Metallschicht oder eine weiße Kunststoffschicht ausgeführt und entweder an der Grundplatte 1 oder der ersten Platte 2 befestigt, beziehungsweise zwischen der Grundplatte 1 und der ersten Platte 2 eingelegt.

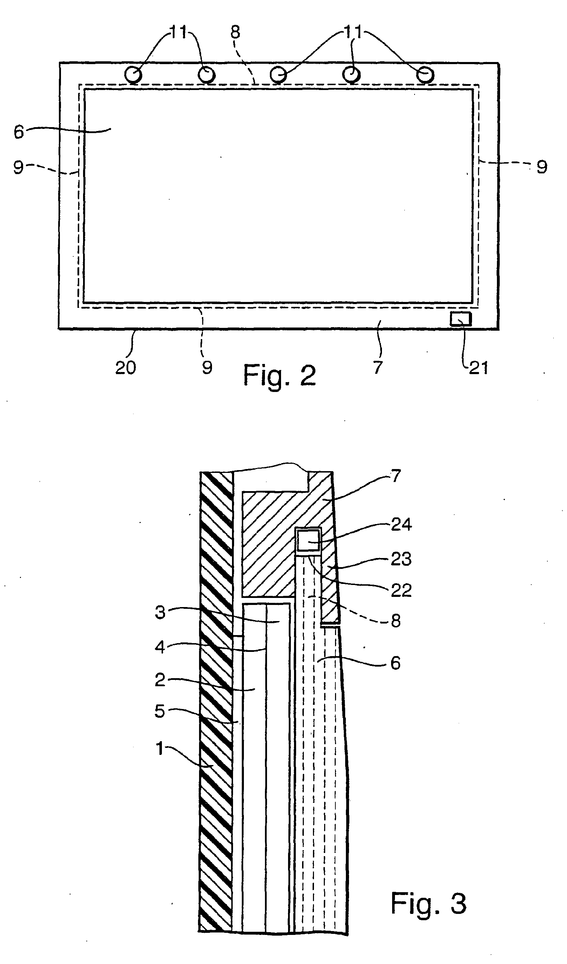

In der Figur 2 ist eine Anzeigevorrichtung 20 dargestellt, bei der die Lichtleiterplatte 6 von dem Gehäuse 7 eingefaßt wird. Hier und im folgenden stehen gleiche Bezugszeichen auch für gleiche Bauteile. Erweiterungen der Lichtleiterplatte 6, die sich unterhalb des sichtbaren Gehäuses 7 erstrecken, sind gestrichelt eingezeichnet. An einer ersten Seitenfläche der Lichtleiterplatte 6 sind die Erweiterungen als eine erste Erweiterung 8 ausgeführt. An den anderen Seitenflächen der Lichtleiterplatte 6 sind die Erweiterungen als eine zweite Erweiterung 9 ausgeführt. Eine Einkopplung von Licht findet nur an der Seitenfläche der Lichtleiterplatte 6 mit der ersten Erweiterung 8 statt.

An der Seitenfläche der Lichtleiterplatte 6, an der die erste Erweiterung 8 angeordnet ist, sind eine Vielzahl von Lichtquellen 11 angeordnet, die für einen Betrachter durch das Gehäuse 7 verdeckt sind. Die Lichtquellen 11 sind zu der Figur 1 beschriebenen Weise an der Lichtleiterplatte 6 angeordnet. Durch die Vielzahl von Lichtquellen 11 kann einerseits mehr Licht in die Lichtleiterplatte 6 eingekoppelt werden, andererseits ist eine homogene Beleuchtung möglich. Das Gehäuse 7 weist eine Öffnung 21 auf, hinter der ein lichtempfindliches Element angeordnet ist, durch das die Helligkeit des Umgebungslichts meßbar ist. Durch eine Messung des in die Öffnung 21 fallenden Lichts ist es damit möglich, daß die Lichtquellen 11 bei einem für eine Ablesbarkeit der Anzeigevorrichtung unzureichenden Umgebungslicht aktiviert werden.

In der Figur 3 ist ein anderes Ausführungsbeispiel der in der Figur 1 beschriebenen Lichteinkopplung in die Lichtleiterplatte 6 dargestellt. Die Lichtleiterplatte 6 weist eine Einkoppelfläche 22 auf, in die das Licht einer Lichtquelle 24 direkt einkoppelbar ist. Die Lichtquelle 24 ist in dem Gehäuse 7 angeordnet und befindet sich direkt vor der Einkoppelfläche 22. Eine Erweiterung 23 des Gehäuses 7 verdeckt die erste Erweiterung 8 der Lichtleiterplatte 6 und die Lichtquelle 24, so daß diese für einen Betrachter nicht sichtbar sind. Eine Spannungsversorgung der Lichtquelle 24 erfolgt durch Leitungen, die durch das Gehäuse 7 verlaufen und die in der Figur 3 nicht eingezeichnet sind.

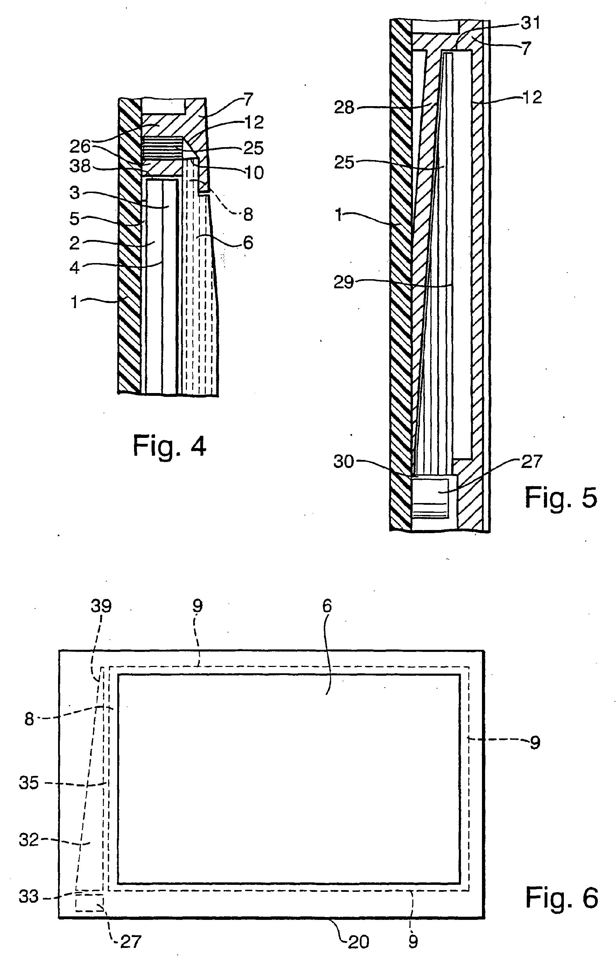

In der Figur 4 ist ein weiteres Ausführungsbeispiel der Erfindung dargestellt, bei dem anstelle zu der Figur 1 beschriebenen Lichtquelle 11 ein Lichtleiterkeil 25 angeordnet. Der Lichtleiterkeil 25 erstreckt sich über die Länge der aus der ersten Platte 2 und der zweiten Platte 3 gebildeten Flüssigkristallzelle und wird von der aus dem Gehäuse 7 geformten ersten Halterung 26 gehalten. In der Figur 5 ist eine Längsansicht auf den Lichtleiterkeil 25 dargestellt. In die einer Keilkante 31 gegenüberliegenden Schmalseite 30 des Lichtleiterkeils 25 wird das Licht einer Lichtquelle 27 eingekoppelt. Unter Totalreflexion wird es durch den Lichtleiter geleitet und zum Beispiel durch Mikroprismen, die an einer Oberfläche 29 des Lichtleiterkeils angeordnet sind oder durch in den Lichtleiterkeil 25 entsprechend den in die Lichtleiterplatte 6 eingebrachten Diffusionskörpern wird Licht aus einer Oberfläche 29 des Lichtleiterkeils 25 ausgekoppelt und über die reflektierende Fläche 12 in die Einkoppelfläche 10 der Lichtleiterplatte 6 reflektiert. Der Lichtleiterkeil 25 wird dabei durch eine erste Halterung 26 und eine zweite Halterung 28 gehalten. Mit dieser Anordnung ist eine homogene Ausleuchtung der Lichtleiterplatte 6 mit einer Lichtquelle 27 möglich, die als eine nahezu punktförmige Lichtquelle, zum Beispiel eine Leuchtdiode oder Glühlampe bzw. Glimmlampe ausgeführt ist. Der Lichtleiterkeil 25 wird bei der zu den Figuren 4 und 5 beschriebenen Anordnung in der Richtung von der Schmalseite 30 zu der Keilkante 31 hin dünner, wobei der Lichtleiterkeil 25 parallel zu einer Seitenfläche 38 der aus der ersten Platte 2, der zweiten Platte 3 und der Flüssigkristallschicht 4 gebildeten Flüssigkristallzelle angeordnet ist. In einem in den Figuren 4 und 5 nicht gezeigten Ausführungsbeispiel ist es auch möglich, den Lichtleiterkeil 25 als ein quaderförmiges Lichtleiterstück auszuführen. Eine Lichtauskopplung kann hierbei z.B. durch einen Rasterdruck oder durch eine aufgerauhte Oberfläche erfolgen.

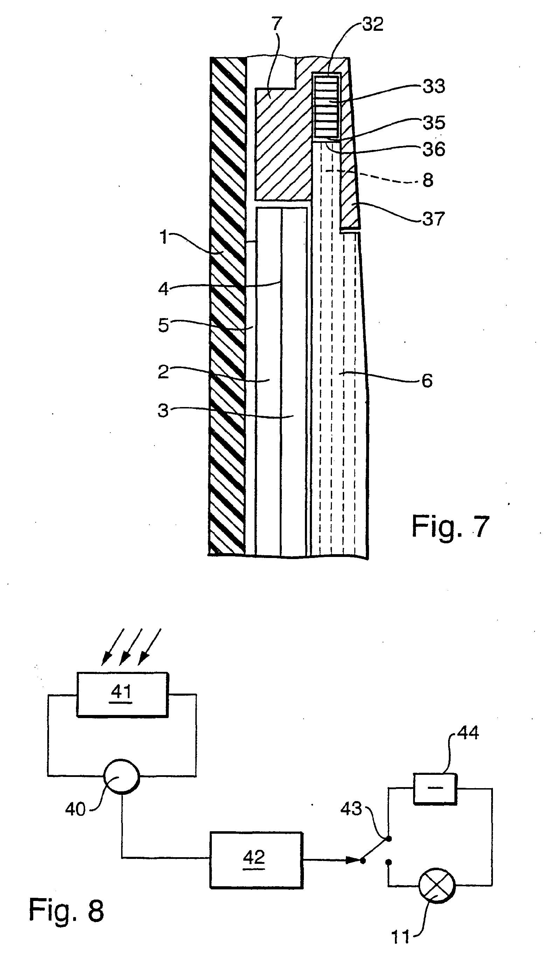

In der Figur 6 ist ein weiteres Ausführungsbeispiel dargestellt, bei der eine Anzeigevorrichtung 20 in einer Aufsicht dargestellt ist. Eine erste Erweiterung 8 und eine zweite Erweiterung 9 schließen an einen sichtbaren Bereich der Lichtleiterplatte 6 an und sind in der Figur gestrichelt dargestellt. Ein Lichtleiterkeil 32 ist seitlich an der ersten Erweiterung 8 angeordnet, wobei der Lichtleiterkeil 32 von einer Schmalseite 33 hin zu einer Keilkante 34 des Lichtleiterkeils 32 dünner wird. Der Lichtleiterkeil 32 ist dabei in der Weise neben der Lichtleiterplatte 6 angeordnet, daß der Lichtleiterkeil 32 in der Ebene der Lichtleiterplatte 6 von der Schmalseite 33 zu der Keilkante 34 hin dünner wird. In der Figur 7 ist eine seitliche Ansicht auf die zu der Figur 6 beschriebene Vorrichtung aus der Richtung der Lichtquelle 27 dargestellt. Die Schmalseite 33 des Lichtleiterkeils 32 ist sichtbar. Das Licht der Lichtquelle 27 wird wie bei der Figur 4 und 5 des beschriebenen Ausführungsbeispiels in den Lichtleiterkeil 32 eingekoppelt und wird durch eine Oberfläche des Lichtleiters 35 in eine Einkoppelfläche 36 der Lichtleiterplatte 6 eingekoppelt, die entlang einer Seitenfläche der Lichtleiterplatte 6 verläuft. Der Lichtleiterkeil 32 wird von dem Gehäuse 7 aufgenommen und ist für einen Betrachter nicht sichtbar, da eine Erweiterung 37 des Gehäuses 7 die erste Erweiterung 8 der Lichtleiterplatte 6 und den Lichtleiterkeil 32 abdeckt. In einem Ausführungsbeispiel kann die Lichtquelle 27 die Farbe des ausgestrahlten Lichts wechseln, wodurch eine Beleuchtung in unterschiedlichen Farben möglich ist. Die in der Figur 6 und 7 beschriebenen Ausführungsformen sind z.B. modifizierbar, indem an der dem Lichtleiterkeil 32 gegenüberliegenden Seitenfläche ein zweiter Lichtleiterkeil mit einer Lichtquelle angeordnet ist. Diese Ausführungsform ist in der Zeichnung nicht dargestellt. Vorzugsweise ist diese Lichtquelle von einer anderen Farbe; so daß ein Umschalten der Farbe der Anzeige durch eine Auswahl der Lichtquellen oder durch einen Betrieb beider Lichtquellen gleichzeitig möglich ist. Ferner kann auch der Lichtleiterkeil 32 in der halben Länge ausgeführt werden, wobei ein zweiter Lichtleiterkeil mit seiner Keilkante an den Lichtleiterkeil 32 anschließt. An der Schmalseite des zweite Lichtleiterkeils ist ebenfalls eine Lichtquelle befestigt, die an der der ersten Lichtquelle gegenüberliegenden Gahäusebegrenzung angeordnet ist. Auch mit dieser Anordnung ist eine Beleuchtung mit zwei Lichtquellen möglich.

In der Figur 8 ist eine Vorrichtung zur Ansteuerung der Lichtquelle bzw. der Lichtquellen 11 dargestellt. Ein Meßgerät 40 mißt den durch ein lichtempfindliches Element 41 fließenden Strom oder die an dem lichtempfindlichen Element 41 abfallende Spannung. Das lichtempfindliche Element 41 ist dabei vorzugsweise ein Fototransistor, eine Fotodiode oder ein lichtabhängiger Ohmscher Widerstand. Von dem Meßgerät 40 wird ein Signal an eine Steuervorrichtung 42 weitergeleitet. In Abhängigkeit von der über das lichtempfindliche Element 41 gemessenen Lichtstärke wird ein Schalter 43 geöffnet oder geschlossen. Im geschlossenen Zustand verbindet der Schalter 43 eine Spannungsquelle 44 mit einer Lichtquelle 11, so daß eine Beleuchtung der Lichtleiterplatte 6 erfolgt. Ist der Schalter 43 geöffnet, erfolgt keine Beleuchtung der Lichtleiterplatte 6, so daß in diesem Fall die Lichtleiterplatte 6 und damit die Flüssigkristallzelle nur von Umgebungslicht erhellt wird.

## Patentansprüche

1. Anzeigevorrichtung mit einer flächigen Anzeige (2, 3, 4), mit einer Frontbeleuchtung zur Beleuchtung der flächigen Anzeige (2, 3, 4), mit einer auf einer einem Betrachter zugewandten Seite der flächigen Anzeige (2, 3, 4) angeordneten Lichtleiterplatte (6), wobei die Lichtleiterplatte (6) eine Einkoppelfläche an einer Schmalseite aufweist, und mit einer Lichtquelle (11, 24, 27), wobei das Licht der Lichtquelle (11, 24, 27) über die Einkoppelfläche in die Lichtleiterplatte (6) eingekoppelt wird, **dadurch gekennzeichnet, dass** in die Lichtleiterplatte (6) lichtstreuende Partikel eingebracht sind, dass das Licht der Lichtquelle (11, 24, 27) durch die lichtstreuenden Partikel zumindest teilweise in Richtung der flächigen Anzeige (2, 3, 4) umgelenkt wird und dass der Durchmesser der lichtstreuenden Partikel in einem Bereich von 1 Mikrometer bis 6 Mikrometer liegt.

2. Vorrichtung nach Anspruch 1, **dadurch gekennzeichnet, dass** die Lichtleiterplatte (6) ein Teil einer Frontplatte eines Gehäuses (7) für die Anzeige (2, 3, 4) ist.

3. Vorrichtung nach einem der vorhergehenden Ansprüche, **dadurch gekennzeichnet, dass** die Lichtquelle (11, 24, 27) eine Kaltkathodenfluoreszenzlampe, eine Leuchtdiode, eine Glimmlampe und/oder eine Glühlampe ist.

4. Vorrichtung nach einem der vorhergehenden Ansprüche, **dadurch gekennzeichnet, dass** das Licht der Lichtquelle (11, 24, 27) über eine reflektierende Fläche (12) in die Lichtleiterplatte (6) einkoppelbar ist.

5. Vorrichtung nach einem der vorhergehenden Ansprüche, **dadurch gekennzeichnet, dass** an einer Seitenfläche (10, 22, 36) der Lichtleiterplatte (6) ein Lichtleiterkeil (25, 32) angeordnet ist, dass das Licht einer nahezu punktförmigen Lichtquelle (24, 27) in einen einer Keilkante (31, 34) gegenüberliegenden Seitenfläche (30, 33) des Lichtleiterkeils (25, 32) einkoppelbar ist und aus dem Lichtleiterkeil (25, 32) in die Lichtleiterplatte (6) auskoppelbar ist.

6. Vorrichtung nach einem der vorhergehenden Ansprüche, **dadurch gekennzeichnet, dass** an der Vorrichtung ein lichtempfindliches, elektrisches Bauteil (41) angeordnet ist, vorzugsweise ein Fototransistor, ein Fotowiderstand oder eine Fotodiode, dass die Umgebungshelligkeit durch das lichtempfindliche Bauteil (41) messbar ist und dass die Anzeige (2, 3, 4) in Abhängigkeit von der Umgebungshelligkeit beleuchtbar ist.

7. Vorrichtung nach einem der vorhergehenden Ansprüche, **dadurch gekennzeichnet, dass** auf der einer Grundplatte (1) zuweisenden Seite der Anzeige (2, 3, 4) ein Reflektor (5) angeordnet ist.

8. Vorrichtung nach einem der vorhergehenden Ansprüche, **dadurch gekennzeichnet, dass** die Anzeige (2, 3, 4) eine Flüssigkristallanzeige ist.

9. Vorrichtung nach einem der vorhergehenden Ansprüche, **dadurch gekennzeichnet, dass** der Volumenanteil der lichtstreuenden Partikel in der Lichtleiterplatte (6) maximal 2 % beträgt und dass die lichtstreuenden Partikel vorzugsweise gleichmäßig über das Volumen der Lichtleiterplatte (6) verteilt sind.

## Claims

1. Display device having a flat display (2, 3, 4), with front lighting for lighting the flat display (2, 3, 4), with an optical conductor plate (6) arranged on a side of the flat display (2, 3, 4) facing a viewer, the optical conductor plate (6) having a launching surface on a narrow side, and with a light source (11, 24, 27), the light of the light source (11, 24, 27) being launched into the optical conductor plate (6) via the launching surface, **characterized in that** light-scattering particles are introduced into the optical conductor plate (6), **in that** the light of the light source (11, 24, 27) is deflected at least partially by the light-scattering particles in the direction of the flat display (2, 3, 4) and **in that** the diameter of the light-scattering particles is in a range of from 1 micrometre to 6 micrometres.

2. Device according to Claim 1, **characterized in that** the optical conductor plate (6) is a part of a front plate of a housing (7) for the display (2, 3, 4).

3. Device according to one of the preceding claims, **characterized in that** the light source (11, 24, 27) is a cold-cathode fluorescent lamp, a light-emitting diode, a negative-glow lamp and/or an incandescent lamp.

4. Device according to one of the preceding claims, **characterized in that** the light from the light source (11, 24, 27) can be launched into the optical conductor plate (6) via a reflecting surface (12).

5. Device according to one of the preceding claims, **characterized in that** an optical conductor wedge (25, 32) is arranged on a lateral surface (10, 22, 36) of the optical conductor plate (6), and **in that** the light from a virtually punctiform light source (24, 27) can be launched into a lateral surface (30, 33), situated opposite an edge (31, 34), of the optical conductor wedge (25, 32), and can be coupled out of the optical conductor wedge (25, 32) into the optical conductor plate (6).

6. Device according to one of the preceding claims, **characterized in that** a light-sensitive, electric component (41), preferably a phototransistor, a photoresistor or a photodiode, is arranged on the device, **in that** the ambient brightness can be measured by the light-sensitive component (41), and **in that** the display (2, 3, 4) can be lit as a function of the ambient brightness.

7. Device according to one of the preceding claims, **characterized in that** a reflector (5) is arranged on the side of the display (2, 3, 4) facing a base plate (1).

8. Device according to one of the preceding claims, **characterized in that** the display (2, 3, 4) is a liquid-crystal display.

9. Device according to one of the preceding claims, **characterized in that** the vblumetric fraction of the light-scattering particles in the optical conductor plate (6) is at most 2%, and **in that** the light-scattering particles are preferably distributed uniformly over the volume of the optical conductor plate (6).

## Revendications

1. Dispositif d'affichage comportant une surface d'affichage (2, 3, 4) par éclairage frontal pour éclairer la surface d'affichage (2, 3, 4), ayant une plaque guide de lumière (6) placée sur le côté de la surface d'affichage (2, 3, 4) du côté de l'observateur,
la plaque guide de lumière (6) ayant une surface de couplage sur un petit côté et une source lumineuse (11, 24, 27),
la lumière fournie par la source lumineuse (11, 24, 27) étant injectée dans la plaque guide de lumière (6) par la surface de couplage,
**caractérisé en ce que**
la plaque guide de lumière (6) comporte des particules de diffraction, qui dévient la lumière de la source lumineuse (11, 24, 27) au moins en partie en direction de la surface d'affichage (2, 3, 4), et
le diamètre des particules de diffraction se situe dans une plage entre 1 micron et 6 microns.

2. Dispositif selon la revendication 1,
**caractérisé en ce que**
la plaque guide de lumière (6) fait partie d'une plaque frontale d'un boîtier (7) pour l'affichage (2, 3, 4).

3. Dispositif selon l'une des revendications précédentes,
**caractérisé en ce que**
la source lumineuse (11, 24, 27) est une lampe à fluorescence à cathode froide, une diode luminescente, une lampe à scintillement et/ou une lampe à incandescence.

4. Dispositif selon l'une des revendications précédentes,
**caractérisé en ce que**
la lumière de la source lumineuse (11, 24, 27) est injectée dans la plaque guide de lumière (6) par une surface réfléchissante (12).

5. Dispositif selon l'une des revendications précédentes,
**caractérisé en ce qu'**
un coin optique (25, 32) est prévu sur une surface latérale (10, 22, 36) de la plaque guide de lumière (6),
la lumière d'une source lumineuse (24, 27) pratiquement ponctuelle est injectée dans une surface latérale (30, 33) du coin optique (25, 32) à l'opposé d'une arête en forme de coin pour être découplée à partir du coin optique (25, 32) dans la plaque guide de lumière (6).

6. Dispositif selon l'une des revendications précédentes,
**caractérisé en ce qu'**
il comporte un composant électrique (41), photosensible, de préférence un phototransistor, une photorésistance ou une photodiode mesurant la luminosité ambiante par le composant photosensible (41) et éclairant l'affichage (2, 3, 4) en fonction de la luminosité ambiante.

7. Dispositif selon l'une des revendications précédentes,
**caractérisé par**
un réflecteur (5) installé sur le côté de l'affichage (2, 3, 4) tourné vers une plaque de base (1).

8. Dispositif selon l'une des revendications précédentes,
**caractérisé en ce que**
l'affichage (2, 3, 4) est un affichage à cristaux liquides.

9. Dispositif selon l'une des revendications précédentes,
**caractérisé en ce que**
le volume des particules de diffraction dans la plaque guide de lumière (6) représente au maximum 2 % et les particules de diffraction sont de préférence réparties régulièrement dans le volume de la plaque guide de lumière (6).
